# FASCICULE DE BREVET EUROPEEN

(11) **EP 2 817 548 B1**
(45) Date de publication et mention de la délivrance du brevet: **30.03.2016**
(21) Numéro de dépôt: 13703103.5
(22) Date de dépôt: 08.02.2013
(51) Int. Cl.: F16L 37/091

(54) **DISPOSITIF DE RACCORDEMENT ÉTANCHE SANS ZONE DE RÉTENTION**
VORRICHTUNG FÜR ABGEDICHTETE KOPPLUNG OHNE EINEN HALTEBEREICH
SEALED-COUPLING DEVICE WITHOUT A RETENTION AREA

(30) Priorité: 20.02.2012 FR 1251529
(43) Date de publication de la demande: 31.12.2014
(73) Titulaire: Parker Hannifin Manufacturing France SAS, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2013/052591
(87) Numéro de publication internationale: WO 2013/124172

(56) Documents cités:
- EP-A2- 2 336 625
- FR-A1- 2 938 038

## Description

La présente invention concerne la réduction des zones de rétention de liquide dans les circuits de transport de liquides tels que les liquides alimentaires. L'invention a plus particulièrement pour objet un dispositif de raccordement étanche d'un conduit, sans zone de rétention dans laquelle le liquide pourrait pénétrer et stagner. De telles zones sont particulièrement gênantes lorsque le fluide en question est un liquide, alimentaire ou autre, susceptible de se dégrader sous l'action de micro-organismes car les zones de rétention sont difficiles à nettoyer de sorte que du liquide risque d'y rester prisonnier et s'y dégrader, polluant le liquide ultérieurement transporté dans le circuit. Le même problème de pollution se pose lorsqu'un changement de liquide est nécessaire, comme par exemple dans le cas d'un changement de teinte dans un circuit de peinture.

### Etat de la technique

Dans un dispositif de raccordement étanche d'un conduit, on trouve classiquement un corps tubulaire délimitant un canal dont un tronçon d'extrémité est agencé pour accueillir une portion d'extrémité du conduit et est pourvu d'une butée axiale limitant l'enfoncement du conduit dans le corps tubulaire. Le tronçon d'extrémité du corps tubulaire reçoit également une rondelle dentée ou une pince d'accrochage du conduit pour retenir le conduit dans le corps tubulaire.

Enfin, un joint d'étanchéité permet d'assurer un raccordement étanche du conduit dans le corps tubulaire du dispositif de raccordement.

Le document FR 2938038 dévoile un dispositif de raccordement d'un conduit selon le préambule de la revendication 1.

Dans un premier mode de réalisation, le joint s'étend dans le corps tubulaire pour enserrer le conduit à raccorder. L'étanchéité est alors réalisée sur la surface extérieure du conduit. La qualité de l'étanchéité est alors tributaire de l'état de la surface extérieure du conduit qui est sujette, avant le raccordement, aux agressions extérieures telles que les chocs et les frottements et est susceptible de présenter des éraflures et autres altérations. En outre, ce type de montage occasionne des zones de rétention en autorisant le passage du liquide entre la butée et la face frontale annulaire du conduit.

Dans un second mode de réalisation, le joint d'étanchéité jouxte la butée pour être comprimé entre la butée et la face annulaire frontale du conduit. Ceci permet de limiter les zones de rétention. La qualité de l'étanchéité est cependant tributaire de l'état de la face frontale annulaire du conduit qui est généralement obtenue au moyen d'une découpe réalisée sur site par un opérateur. Il en résulte des rayures sur cette face qui n'est en outre que rarement parfaitement perpendiculaire à l'axe du conduit.

Selon un troisième mode de réalisation, le corps comprend un appendice tubulaire intérieur qui est coaxial au tronçon d'extrémité du corps tubulaire et qui s'engage à l'intérieur du conduit lors de l'insertion de celui-ci dans le corps tubulaire. L'étanchéité est alors assurée par un joint torique disposé dans une gorge externe réalisée sur l'appendice pour venir en contact de la surface intérieure du conduit dont l'état de surface est généralement bon. Ce joint est disposé à distance de l'extrémité libre de l'appendice créant une zone de rétention. Les raccords disposant d'un appendice intérieur réduisent en outre la section de passage du fluide et rendent nécessaire une coûteuse augmentation de la section des conduits.

### Objet de l'invention

Un but de l'invention est de réduire la pénétration de liquide en circulation dans un conduit jusqu'à des zones de rétention.

### Exposé de l'invention

A cet effet, on prévoit, selon l'invention, un dispositif de raccordement d'un conduit, selon la revendication 1.

Ainsi, on obtient un dispositif de raccordement établissant l'étanchéité avec le conduit par un manchon élastique ayant une extrémité libre plaquée sur la surface intérieure du conduit. Ce dispositif réalise une étanchéité insensible à l'état de surface du conduit et de son faciès de découpe.

Avantageusement, le dispositif comprend un organe de rappel élastique du moyen de maintien vers sa position active de façon à rendre le raccord démontable et réutilisable.

Selon un mode de réalisation particulier, l'extrémité du manchon élastique est biseautée intérieurement afin d'éviter tout décollement de celle-ci et de limiter les turbulences lors du passage du fluide depuis le conduit dans le manchon.

D'autres caractéristiques et avantages de l'invention ressortiront à la lecture de la description qui suit de modes de réalisation particuliers non limitatifs de l'invention.

### Brève description des figures

Il sera fait référence aux figures annexées, parmi lesquelles :
- la figure 1 est une demi-vue schématique partielle en coupe d'un mode de réalisation particulier du dispositif de raccordement selon l'invention, un conduit étant présenté pour être raccordé ;
- la figure 2 est une vue analogue à la figure 1, le conduit étant raccordé au dispositif ;
- La figure 3 est une vue en perspective d'une bague de maintien selon le mode de réalisation de la figure 1 ;
- La figure 4 est une vue de détail partielle en coupe du mode de réalisation de la figure 1 ;
- la figure 5 est une vue de détail analogue à la figure 4 selon un deuxième mode de réalisation de l'invention ;
- la figure 6 est une vue analogue à la figure 2 du dispositif de raccordement selon un troisième mode de réalisation du dispositif de raccordement selon l'invention ;
- la figure 7 est une vue analogue à la figure 2 du dispositif de raccordement selon un quatrième mode de réalisation du dispositif de raccordement selon l'invention ;
- la figure 8 est une vue de détail d'un élément du dispositif de raccordement selon le mode de réalisation de la figure 7 ;
- la figure 9 est une demi vue schématique partielle en coupe d'un cinquième mode de réalisation parti du dispositif de raccordement selon l'invention.

### Description détaillée d'au moins un mode de réalisation de l'invention

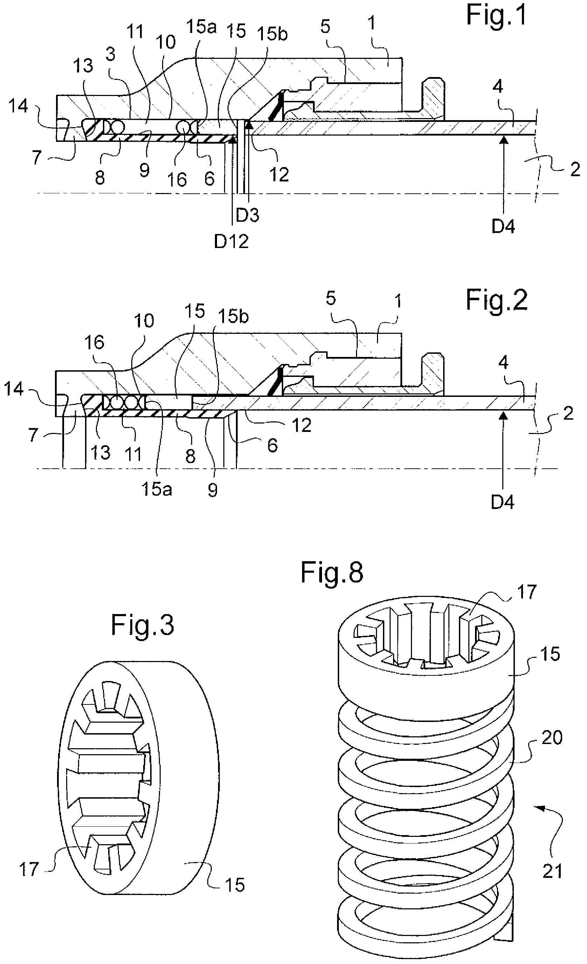

En référence aux figures 1 à 4, le dispositif de raccordement conforme à l'invention comprend un corps tubulaire généralement désigné 1 délimitant un canal 2 comportant un tronçon 3 de réception d'une extrémité de conduit 4 de diamètre intérieur D4. Dans le tronçon de réception 3 est formé un chambrage d'entrée 5 qui reçoit des moyens pour assujettir l'extrémité de conduit 4 dans le tronçon de réception 3. Ces moyens sont connus en eux-mêmes et comprennent ici un insert dont une extrémité, située du côté du fond du chambrage, est associée à une rondelle d'ancrage ayant une circonférence interne divisée en dents destinées à venir mordre la surface externe de l'extrémité de conduit 4. Ladite extrémité de l'insert et la rondelle d'ancrage sont engagées dans une douille qui est en butée contre un épaulement du chambrage 5 et qui est conformée pour former une butée pour la rondelle d'ancrage. L'insert reçoit à coulissement un poussoir tubulaire ayant un nez s'étendant au voisinage de la rondelle et une extrémité de manoeuvre s'étendant en saillie à l'extérieur du corps 1 du raccord. Le poussoir est mobile entre une position enfoncée dans laquelle le nez déforme la rondelle pour en soulever les dents et une position en retrait dans laquelle le nez est écarté de la rondelle. D'autres moyens d'accrochage sont cependant utilisables, comme un verrou.

Le corps 1 comprend un manchon d'étanchéité, généralement désigné 6, monté coaxialement au corps tubulaire 1 dans le tronçon de réception 3. Le tronçon de réception 3 est pourvu intérieurement d'un épaulement annulaire périphérique 7 formant une butée axiale du manchon 6.

Le manchon 6 est de forme tubulaire et comprend une surface intérieure 8 et une surface extérieure 9. La surface extérieure 9 est en regard d'une paroi intérieure 10 du corps 1. Ces deux surfaces en regard définissent un logement tubulaire d'accueil 11 du conduit 4. Une première extrémité du manchon 6 délimite une entrée annulaire 12 du logement tubulaire d'accueil 11. Cette entrée annulaire 12 a un diamètre intérieur D12 et un diamètre extérieur D3. On remarquera que le diamètre D3 est sensiblement égal au diamètre extérieur du conduit 4. Le manchon 6 comprend également une extrémité 13 en appui contre une surface 14 de l'épaulement annulaire 7. L'extrémité 12 du manchon 6 est radialement déformable élastiquement entre un état de repos dans lequel l'entrée annulaire 12 a un diamètre intérieur D12 supérieur au diamètre intérieur D4 du conduit 4 et un état déformé dans lequel le diamètre intérieur D12 de l'entrée annulaire 12 est inférieur au diamètre intérieur D4 du conduit 4, autorisant une insertion de celui-ci dans le logement tubulaire 11. Une bague cylindrique 15 est placée dans l'entrée annulaire 12 du logement 11 et maintient l'extrémité 12 du manchon 6 dans son état déformé. Cette bague 15 coulisse axialement, sous l'effet d'une poussée appliquée par l'extrémité du conduit 4, dans le logement tubulaire 11 d'accueil entre une position active dans laquelle elle maintient l'extrémité 12 du manchon 6 dans son état déformé et une position inactive qui permet à cette extrémité de revenir à son état de repos. La face 15a de la bague 15 opposée à la face 15b sur laquelle pousse l'extrémité du conduit 4 est en contact avec une première extrémité d'un ressort hélicoïdal 16 monté dans le logement tubulaire d'accueil 11 et dont l'autre extrémité est en appui sur la section du manchon 6 en butée contre l'épaulement annulaire 7. La longueur de ce ressort hélicoïdal 16 lorsqu'il est non contraint est telle qu'il amène la bague 15 de manière que sa face 15b soit dans le plan de l'entrée annulaire 12.

Lorsqu'un conduit 4 est introduit dans le corps 1 du dispositif, le conduit 4 vient au contact de la face 15b de la bague 15. Le mouvement d'enfoncement étant poursuivi par l'opérateur, la bague 15 coulisse dans le logement d'accueil 11 sous la poussée de l'extrémité du conduit 4 sur la face 15b et le conduit 4 pénètre dans le logement d'accueil 11. En l'absence de la bague 15, l'extrémité du manchon 6 délimitant l'entrée annulaire 12 tend à revenir vers son état de repos et vient se plaquer contre la surface intérieure du conduit 4. L'effort élastique de plaquage ainsi obtenu permet d'assurer l'étanchéité entre le manchon 6 et le conduit 4. La pression du liquide en circulation dans le conduit s'applique sur la surface intérieure 8 du manchon 6 et vient s'ajouter à cet effort élastique de plaquage. Le cumul de ces deux efforts contribue à assurer l'étanchéité de la liaison entre le manchon 6 et le conduit 4. On obtient alors un dispositif de raccordement d'un conduit 4 dont l'étanchéité est réalisée dès l'entrée du conduit 4 dans son logement d'accueil 11, éliminant ainsi les problèmes d'infiltration de liquide dans une zone de rétention de l'art antérieur. Le moyen de maintien de l'extrémité du manchon 6 dans son état déformé, ici la bague 15, est rappelé élastiquement en position en cas d'extraction du conduit 4. Ainsi, le dispositif de raccordement est démontable et réutilisable.

Selon un mode de réalisation préféré, la bague 15 est pourvue de cannelures axiales intérieures 17 sur sa surface interne. Ces cannelures axiales intérieures 17 permettent de réduire la surface de frottement entre la surface intérieure de la bague 15 et la surface extérieure 9 du manchon 6, facilitant ainsi le coulissement relatif de la bague 15 par rapport au manchon 6.

Selon un mode de réalisation particulièrement avantageux, l'extrémité du manchon 6 définissant l'entrée annulaire 12 est biseautée intérieurement de sorte que la surface intérieure du manchon 6 se raccorde progressivement à la surface intérieure du tube. Cette disposition favorise l'application de ladite extrémité sur la surface intérieure du tube sous l'effet de la pression et permet d'éviter tout décollement du manchon d'étanchéité tout en limitant les turbulences lors du passage du fluide entre le conduit et le manchon.

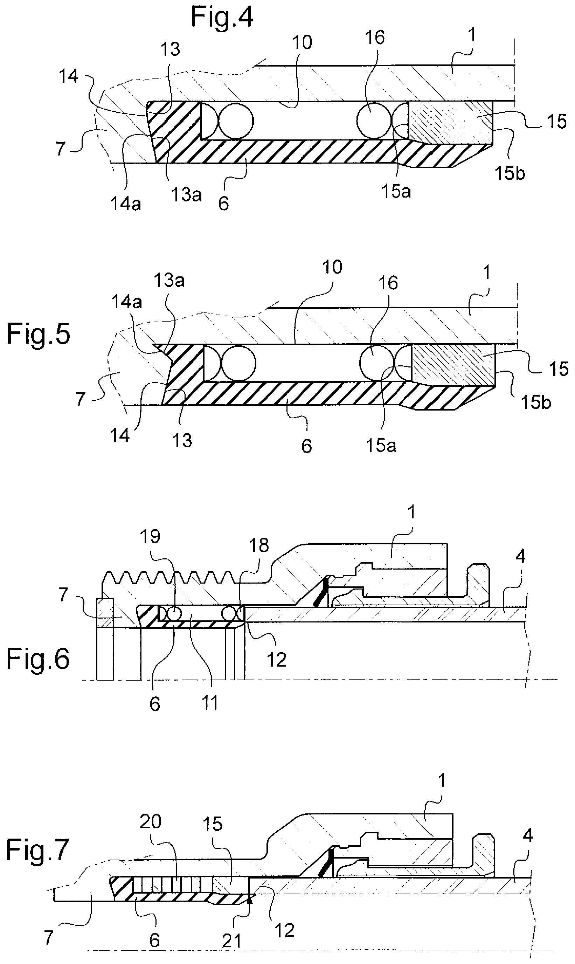

En référence à la figure 4, la surface 14 concave de l'épaulement annulaire 7 présente une surface tronconique 14a ayant un petit diamètre du côté du manchon 6 et coopérant avec une surface 13a convexe de celui-ci. Cet agencement maintient le joint en position dans son logement, évite une déformation de celui-ci sous l'effet de la pression et son déplacement dans le canal 2 (ce qu'on appelle une extrusion du joint). La figure 5 présente une variante d'un mode de réalisation des surfaces 13 et 14 de contact entre le manchon 6 et l'épaulement annulaire 7. Selon ce mode de réalisation, la surface 13 du manchon 6 est concave et coopère avec une surface 14 convexe de l'épaulement annulaire 7. On notera que l'effort exercé par l'extrémité du conduit 4 sur la bague 15 vient plaquer, par réaction du ressort 16 sur l'extrémité du manchon en contact avec l'épaulement annulaire 7, la surface 13 du manchon 6 contre la surface 14 de l'épaulement annulaire 7, contribuant ainsi à rendre ce contact étanche.

Les éléments identiques ou analogues à ceux précédemment décrits porteront une référence numérique identique à ceux-ci dans la description qui suit des troisième, quatrième, cinquième et sixième modes de réalisation.

Selon un troisième mode de réalisation détaillé en figure 6, l'extrémité du conduit 4 prend appui directement sur les spires jointives 18 d'un ressort hélicoïdal 19 débouchant dans l'entrée annulaire 12 du logement 11. L'espace délimité par la surface intérieure des spires 18 maintient l'extrémité du manchon 6 dans son état déformé. Ainsi, le moyen de maintien du manchon 6 dans son état déformé et son moyen de rappel élastique sont rassemblés en une unique pièce, plus économique en termes de montage et de fabrication.

Selon un quatrième mode de réalisation détaillé aux figures 7 et 8, la bague cylindrique 15 de maintien du manchon 6 dans son état déformé est solidaire d'un ressort hélicoïdal 20. Cet ensemble peut être réalisé par moulage d'une bague pourvue d'une découpe hélicoïdale. Ainsi, le moyen de maintien du manchon 6 dans son état déformé et son moyen de rappel élastique sont rassemblés en une unique pièce 21 plus économique en terme de montage et de fabrication. La bague 15 est pourvue de cannelures axiales 17 sur sa face interne.

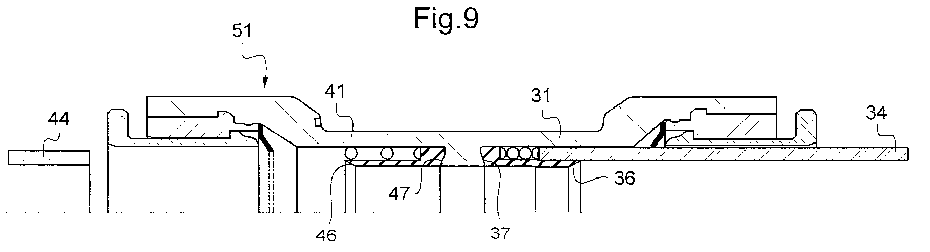

Selon un cinquième mode de réalisation détaillé en figure 9, le corps 51 comprend deux corps tubulaires 31 et 41 en communication fluidique. Ce dispositif correspond à la mise en communication fluidique de deux dispositifs décrits en figure 6. Ce dispositif permet de réaliser une jonction étanche rapide entre deux conduits 34 et 44.

Le dispositif selon le troisième, quatrième, cinquième et sixième mode de réalisation est par ailleurs identique au dispositif selon le premier mode de réalisation.

Bien entendu, l'invention n'est pas limitée aux modes de réalisation décrits mais englobe toute variante entrant dans le champ de l'invention telle que définie par les revendications.

En particulier :
- bien que la butée axiale pour le manchon cylindrique d'étanchéité 6 soit ici un épaulement annulaire périphérique, l'invention s'applique également à d'autres types de butées comme par exemple une pluralité de tétons en saillie de la paroi intérieure du corps tubulaire du dispositif de raccordement;
- bien que des cannelures axiales soient présentes sur la surface interne de la bague de maintien 15, l'invention s'applique également à une bague dépourvue de cannelures ou pourvue de cannelures axiales sur ses deux surfaces ou sur sa surface externe seule ;
- bien que le dispositif décrit en figure 6 comporte deux corps tubulaires en communication fluidique, l'invention s'applique également à un dispositif comportant plus de deux corps tubulaires, comme par exemple une union Té à trois corps ou une nourrice à quatre corps ou plus ;
- le manchon d'étanchéité peut comporter deux parois annulaires concentriques délimitant entre elles un logement d'accueil de l'extrémité du conduit 4 et d'un élément de maintien dans son état déformé de l'extrémité du manchon délimitant l'entrée annulaire dudit logement.

## Revendications

1. Dispositif de raccordement d'un conduit (4), comprenant au moins un corps tubulaire (1) et un manchon tubulaire d'étanchéité (6), le corps tubulaire (1) étant pourvu intérieurement d'une butée axiale (7) pour le manchon tubulaire d'étanchéité (6), le manchon tubulaire d'étanchéité (6) étant monté coaxialement au corps tubulaire (1) pour définir un logement tubulaire d'accueil (11) du conduit (4), le manchon d'étanchéité (6) ayant une extrémité qui délimite une entrée annulaire (12) du logement (11) **caractérisé en ce que** l'extrémité du manchon tubulaire d'étanchéité (6) est radialement déformable élastiquement entre un état de repos dans lequel l'entrée annulaire (12) a un diamètre intérieur supérieur au diamètre intérieur du conduit (4) et un état déformé dans lequel le diamètre intérieur de l'entrée annulaire (12) est tel qu'il permet une introduction du conduit (4) dans le logement (11), ledit logement (11) du dispositif (1) comprenant un moyen de maintien (15, 19, 21) de ladite extrémité du manchon d'étanchéité (6) dans son état déformé, ledit moyen (15, 19, 21) étant agencé pour être mobile entre une position active dans laquelle il maintient ladite extrémité dans l'état déformé et une position inactive dans laquelle il est amené par le conduit (4) lors de son introduction et permet à ladite extrémité de revenir vers son état de repos.

2. Dispositif selon l'une quelconque des revendications précédentes, dans lequel le logement tubulaire d'accueil (11) est défini par une surface extérieure (9) du manchon d'étanchéité (6) et une paroi intérieure (10) du corps tubulaire 1 en regard.

3. Dispositif selon l'une quelconque des revendications précédentes, dans lequel la butée (7) du corps tubulaire (1) présente une surface tronconique (14a) ayant un petit diamètre du côté du manchon d'étanchéité (6).

4. Dispositif selon l'une quelconque des revendications précédentes, dans lequel le moyen de maintien comprend une bague (15) entourant une extrémité du manchon d'étanchéité (6).

5. Dispositif selon la revendication 4, dans lequel la surface interne de la bague (15) entourant une extrémité du manchon d'étanchéité (6) comprend des cannelures axiales (17) .

6. Dispositif selon l'une quelconque des revendications précédentes, comprenant au moins un organe de rappel élastique (16, 19, 20) du moyen de maintien (15) vers sa position active.

7. Dispositif selon la revendication 6, dans lequel l'organe de rappel élastique (16, 19, 20) comprend un ressort hélicoïdal (16, 19) entourant le manchon d'étanchéité (6).

8. Dispositif selon la revendication 6, dans lequel l'organe de rappel élastique (20) comprend une bague (15) qui est en une seule pièce (21) avec le moyen de maintien et qui est pourvue d'une découpe hélicoïdale.

9. Dispositif selon l'une quelconque des revendications précédentes, comportant au moins deux corps tubulaires (41, 31) en communication fluidique.

## Patentansprüche

1. Vorrichtung zur Verbindung einer Rohrleitung (4), umfassend mindestens ein rohrförmiges Gehäuse (1) und eine rohrförmige Dichtungshülse (6), wobei das rohrförmige Gehäuse (1) innen mit einem axialen Anschlag (7) für die rohrförmige Dichtungshülse (6) versehen ist, wobei die rohrförmige Dichtungshülse (6) koaxial zum rohrförmigen Gehäuse (1) angebracht ist, um eine rohrförmige Aufnahme (11) zur Aufnahme der Rohrleitung (4) zu definieren, wobei die Dichtungshülse (6) ein Ende hat, das eine ringförmige Einführungsöffnung (12) der Aufnahme (11) begrenzt, **dadurch gekennzeichnet, dass** das Ende der rohrförmigen Dichtungshülse (6) radial zwischen einem Ruhezustand, in dem die ringförmige Einführungsöffnung (12) einen Innendurchmesser hat, der größer als ein Innendurchmesser der Rohrleitung (4) ist, und einem verformten Zustand elastisch verformbar ist, in dem der Innendurchmesser der ringförmigen Einführungsöffnung (12) derart ist, dass er ein Einführen der Rohrleitung (4) in die Aufnahme (11) ermöglicht, wobei die genannte Aufnahme (11) der Vorrichtung (1) Haltemittel (15, 19, 21) zum Halten des genannten Endes der Dichtungshülse (6) in seinem verformten Zustand umfasst, wobei die genannten Mittel (15, 19, 21) so ausgebildet sind, dass sie zwischen einer aktiven Position, in der sie das genannte Ende in dem verformten Zustand halten, und einer inaktiven Position beweglich sind, in die sie von der Rohrleitung (4) bei deren Einführen gebracht werden und in der sie dem genannten Ende ermöglichen, in seinen Ruhezustand zurückzukehren.

2. Vorrichtung nach einem der vorhergehenden Ansprüche, wobei die rohrförmige Aufnahme (11) von einer Außenfläche (9) der Dichtungshülse (6) und einer gegenüberliegenden Innenwand (10) des rohrförmigen Gehäuses (1) definiert ist.

3. Vorrichtung nach einem der vorhergehenden Ansprüche, wobei der Anschlag (7) des rohrförmigen Gehäuses (1) eine kegelstumpfförmige Oberfläche (14a) aufweist, die einen kleinen Durchmesser auf der Seite der Dichtungshülse (6) hat.

4. Vorrichtung nach einem der vorhergehenden Ansprüche, wobei die Haltemittel einen Ring (15) umfassen, der ein Ende der Dichtungshülse (6) umgibt.

5. Vorrichtung nach Anspruch 4, wobei die ein Ende der Dichtungshülse (6) umgebende Innenfläche des Rings (15) axiale Rillen (17) umfasst.

6. Vorrichtung nach einem der vorhergehenden Ansprüche, umfassend mindestens ein elastisches Rückstellelement (16, 19, 20) zum Rückstellen der Haltemittel (15) in ihre aktive Position.

7. Vorrichtung nach Anspruch 6, wobei das elastische Rückstellelement (16, 19, 20) eine Schraubenfeder (16, 19) umfasst, die die Dichtungshülse (6) umgibt.

8. Vorrichtung nach Anspruch 6, wobei das elastische Rückstellelement (20) einen Ring (15) umfasst, der einstückig (21) mit den Haltemitteln ausgebildet und mit einem schraubenförmigen Ausschnitt versehen ist.

9. Vorrichtung nach einem der vorhergehenden Ansprüche, umfassend mindestens zwei in Fluidverbindung stehende rohrförmige Gehäuse (41, 31).

## Claims

1. Device for the connection of a duct (4), comprising at least one tubular body (1) and a tubular sealing sleeve (6), the tubular body (1) being provided internally with an axial stop (7) for a tubular sealing sleeve (6), the tubular sealing sleeve being mounted coaxially with the tubular body (1) so as to define a tubular accommodating housing (11) for the duct (4), the tubular sealing sleeve (6) having an end which delimits an annular inlet (12) to the housing (11) **characterized in that** the end of the tubular sealing sleeve (6) is radially deformable elastically between a rest state in which the annular inlet (12) has an inside diameter greater than the inside diameter of the duct (4) and a deformed state in which the inside diameter of the annular inlet (12) is such that it allows the duct (4) to be introduced into the housing (11), said housing (11) comprising a maintaining means (15, 19, 21) for maintaining said end of the sealing sleeve (6) in its deformed state, said means (15, 19, 21) being designed to be movable between an active position in which it maintains said end in the deformed state and an inactive position in which it is carried by the duct (4) during the introduction thereof and allows said end to return to its rest state.

2. Device according to Claim 1, wherein the tubular accommodating housing (11) is defined by an external surface (9) of the sealing sleeve (6) and an opposite internal wall (10) of the tubular body (1).

3. Device according to any of the preceding claims, wherein the stop (7) of the tubular body (1) has a frustoconical surface (14a) that has a small diameter by the sealing sleeve (6).

4. Device according to any of the preceding claims, wherein the maintaining means comprises a ring (15) surrounding one end of the sealing sleeve (6).

5. Device according to Claim 4, wherein the inner surface of the ring (15) surrounding one end of the sealing sleeve (6) comprises axial ribs (17).

6. Device according to any of the preceding claims, comprising at least one elastic return member (16, 19, 20) for returning the maintaining means (15) to its active position.

7. Device according to Claim 6, wherein the elastic return member (16, 19, 20) comprises a helical spring (16, 19) surrounding the sealing sleeve (6).

8. Device according to Claim 6, wherein the elastic return member (20) comprises a ring (15) which is in one piece (21) with the maintaining means and which is provided with a helical cutout.

9. Device according to any of the preceding claims, having at least two tubular bodies (41, 31) in fluidic communication.
